# EUROPEAN PATENT SPECIFICATION

(11) **EP 2 505 458 B1**
(45) Date of publication and mention of the grant of the patent: **22.03.2017**
(21) Application number: 12153633.8
(22) Date of filing: 02.02.2012
(51) Int. Cl.: B62D 25/02, B62D 25/20, B60K 1/04

(54) **COMPACT VEHICLE FRAME STRUCTURE**
KOMPAKTE FAHRZEUGRAHMENSTRUKTUR
STRUCTURE COMPACTE DE CADRE DE VÉHICULE

(30) Priority: 28.03.2011 JP 2011069355
(43) Date of publication of application: 03.10.2012
(73) Proprietor: Honda Motor Co., Ltd., Tokyo 107-8556 (JP)
(72) Inventor: Kashiwai, Mikio, Saitama, 351-0193 (JP); Kobayashi, Hiroyoshi, Saitama, 351-0193 (JP); Sugita, Haruomi, Saitama, 351-0193 (JP); Kikuchi, Osamu, Saitama, 351-0193 (JP)
(74) Representative: Weickmann & Weickmann PartmbB

(56) References cited:
- EP-A1- 2 151 343
- WO-A2-2010/081997
- FR-A1- 2 747 637
- JP-A- 2006 182 295
- JP-A- 2009 193 942
- US-A1- 2003 066 694
- US-A1- 2009 001 766

## Description

### Technical Field

The present invention relates to a compact vehicle frame structure, and more specifically to a technology of protecting a battery loaded in an electric vehicle or the like.

### Background Art

Conventionally known is a compact vehicle storing a battery (4) under floor, as is seen in, for example, JP 09-286246 A. This compact vehicle stores the battery (4) inside of a frame (3) of a rectangular shape in a plan view. The battery (4) is provided on the top of a tray (40) supported on a bottom side of the frame (3).

A compact vehicle frame structure according to the preamble of claim 1 is known from JP 2009-193942 A.

### Technical Problem

The battery can repeatedly perform charge and discharge, and therefore a vehicle body frame structure loaded with the battery is desirably a structure with which external force generated by, for example, impact hardly has an influence on the battery.

To this end, it is possible to enhance upsizing of the frame, but this leads to a vehicle weight increase, which is not preferable in terms of fuel consumption (electric consumption) and costs.

It is the object of the present invention to provide a compact vehicle frame structure capable of having little influence of external force generated by, for example, impact on a battery while suppressing occurrence of a dramatic weight increase.

### Solution to Problem

To address the problem described above, a compact vehicle frame structure according to the present invention includes: a vehicle body frame; a floor permitting placement of feet of a driver seated on a seat provided in the vehicle body frame; and a battery provided on a bottom side of the floor and supplying electric power to a motor, and the vehicle body frame is provided with: a pair of right and left inner frame members provided on sides of the battery; and a pair of right and left outer frame members each having a battery protection part of a hollow shape located on an outer side of the inner frame member and separately from the battery, r characterized in that the vehicle body frame is provided with, below the inner frame members, bottom frame members supporting a battery tray for placing the battery, and the battery protection parts of the outer frame members are provided between the inner frame members and the bottom frame members vertically in a side view and are separated from the bottom frame members.

This configuration can suppress deformation of the inner frame members and the bottom frame members in conjunction with the deformation of the battery protection parts of the outer frame members as a result of receiving the external force, and especially can remarkably suppress an influence on the bottom frame members supporting the battery tray for placing the battery, so that the battery is easily protected from the external force.

Furthermore, with this compact vehicle frame structure, the battery protection parts in the pair of right and left outer frame members separated from the battery are provided on the even outer sides of the pair of right and left inner frame members provided on the sides of the battery; therefore, external force from the sides acts on the battery protection parts of the outer frame members with high possibility.

Therefore, the battery protection parts of the outer frame members may be deformed inwardly by the external force, even in which case the deformation of the battery protection parts has little influence on the battery since the battery protection parts of the outer frame members are on the ever outer sides of the pair of right and left inner frame members provided on the sides of the battery and also separately from the battery.

Moreover, the battery protection parts of the outer frame members are hollow-shaped, which can suppress a weight increase.

Therefore, this compact vehicle frame structure can have little influence of the external force generated by, for example, impact on the battery while suppressing occurrence of a dramatic weight increase.

Moreover, the hollow shapes of the battery protection parts of the outer frame members and the separation of the battery protection parts from the battery increase a so-called crush margin of the battery protection parts, so that energy generated by, for example, impact is easily absorbed accordingly, the external force has even less influence on the battery, and the battery can be easily protected from the external force.

A cross frame member of a hollow shape extending across the inner frame members and coupling together the battery protection parts may be provided between the battery protection parts of the pair of right and left outer frame members.

This configuration can improve rigidity of the vehicle body frame.

Front parts of the pair of inner frame members may bend inwardly in front of the battery.

Such configuration makes it easy to protect the battery from even the external force from the front through energy absorption as a result of deformation of the inner frame member front parts.

The compact vehicle frame structure according to the present invention may further includes: the driver's seat provided above the floor; and a rear seat provided behind the driver's seat and located at a position higher than the driver's seat, and the vehicle body frame may be provided with rear seat frames rising upwardly from rear parts of the right and left outer frame members and extending towards the rear behind the battery to support the rear seat.

Such configuration makes it easy to protect the battery from even the external force from the rear through energy absorption as a result of deformation of the rear seat frames.

The vehicle body frame may be provided with top frames forming part of a roof above the driver and extending in an anteroposterior direction, bend front parts of the outer frame members upwardly, couple together the front parts of the outer frame members and front parts of the top frames with coupling members, and couple together the outer frame members and the top frames with right and left longitudinal members behind the driver.

Such configuration forms a boarding space between the top frames and the outer frame members, which makes it easy to form the boarding space wide.

Each of the outer frame members may be provided with a horizontal part bending the front part upwardly and extending horizontally, and may support a top part of a cushion unit of a front wheel with the horizontal part.

Such configuration makes it possible to firmly support the top part of the cushion unit of the front wheel with the highly rigid outer frame members.

### Brief Description of Drawings

Fig. 1 is a plan view showing one example of a compact vehicle using one embodiment of a compact vehicle frame structure according to the present invention.
Fig. 2 is a side view of same.
Fig. 3 is a bottom view of same.
Fig. 4 is a partially omitted sectional view of Fig. 2, taken along IV-IV.

### Description of Embodiments

Hereinafter, an embodiment of a compact vehicle frame structure according to the present invention will be described with reference to the drawings. In the drawings, the same or corresponding portions are provided with the same numerals.

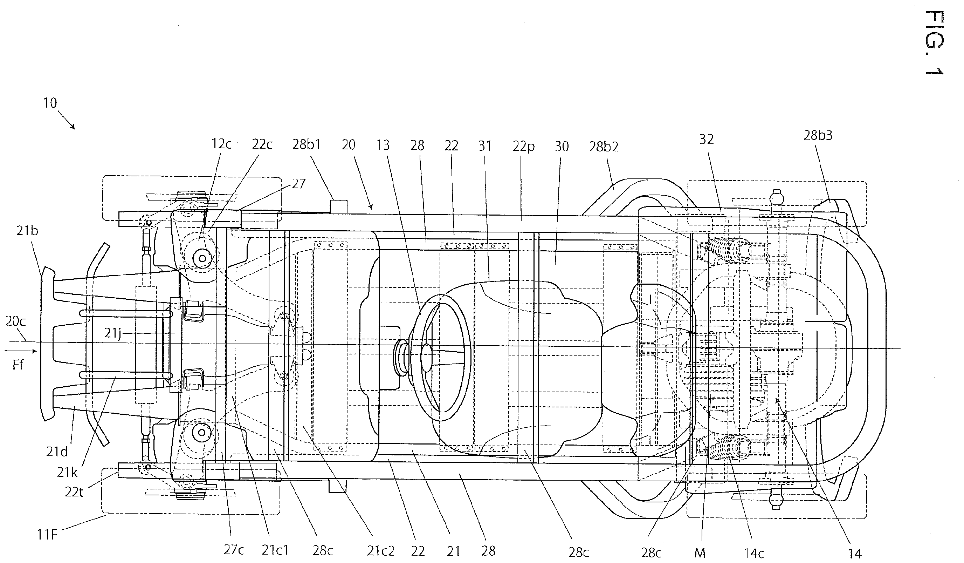

The compact vehicle 10 shown in Figs. 1 to 3 is an electric compact four-wheel vehicle.

This compact vehicle 10 includes: a vehicle body frame 20, a floor 30 that permits placement of feet of a driver D seated on a driver's seat 31 provided in the vehicle body frame 20; and batteries B that are provided on a bottom side of the floor 30 and that supply electric power to a motor M as a power source running the vehicle.

In front of the vehicle body frame 20, a pair of right and left front wheels 11 F is suspended with a steering device 12 in between. Behind the vehicle body frame 20, rear wheels 11 R as a pair of right and left driving wheels are provided with a power unit 14, including the motor M, in between. The steering device 12 is steered by rotational operation of a steering wheel 13 by the driver D.

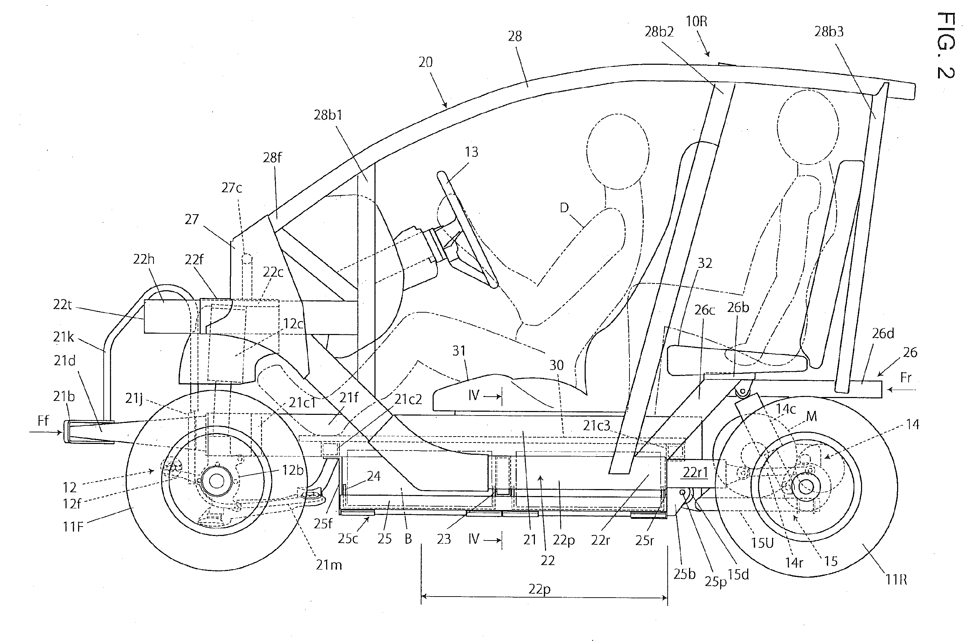

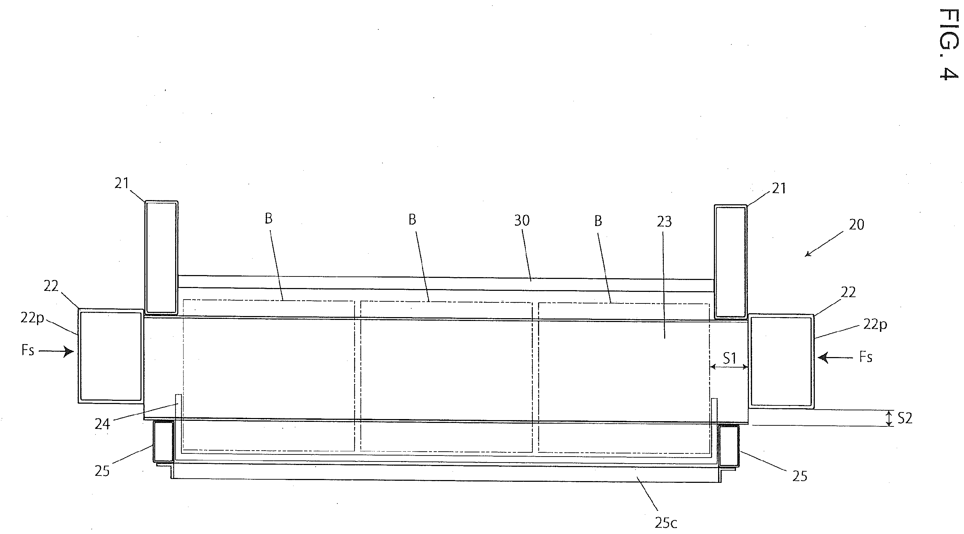

As shown in Figs. 2 to 4, mainly, the vehicle body frame 20 is provided with: a pair of right and left inner frame members 21 and 21 provided on sides of the batteries B; and a pair of right and left outer frame members 22 and 22 each having a hollow battery protection part 22p located on an outer side of the inner frame member 21 and separately from the battery B. A clearance between the battery B and the battery protection part 22p of the outer frame member 22 is denoted by S1 in Fig. 4.

With the frame structure of this compact vehicle, on even outer sides of the pair of right and left inner frame members 21 provided on the sides of the batteries B, the pair of right and left outer frame members 22 each having the battery protection part 22p located separately from the battery B is provided; therefore, external force Fs from the sides acts on the battery protection part 22p of the outer frame member 22 with high possibility.

Therefore, the battery protection part 22p of the outer frame member 22 may be deformed inwardly by the external force Fs, even in which case the battery protection parts 22p are on the even outer sides of the pair of right and left inner frame members 21 provided on the sides of the batteries B and are also separated from the batteries B, and thus the deformation of the battery protection parts 22p hardly has an influence on the batteries B.

Moreover, the battery protection part 22p of the outer frame member 22 is hollow-shaped and thus can suppress a weight increase. Note that not only the battery protection part 22p but also the entire outer frame member 22 of this embodiment is hollow-shaped.

Therefore, with the frame structure of this compact vehicle 10, while suppressing a dramatic weight increase, external force generated by, for example, impact can have little influence on the batteries B.

Moreover, the hollow shape of the battery protection part 22p of the outer frame member 22 and the separation of the battery protection part 22p of the outer frame member 22 from the battery B increase a so-called crush margin of the battery protection part 22p; therefore, energy generated by, for example, impact is easily absorbed accordingly, the external force has even less influence on the battery B, and the battery B is easily protected from the external force.

Provided between the battery protection parts 22p of the pair of right and left outer frame members 22 is a cross frame member 23 of a hollow shape that extends across the inner frame members 21 to couple together the battery protection parts 22p.

Such configuration can improve rigidity of the vehicle body frame 20.

As a structure of coupling together the outer frame members 22 and the cross frame member 23, any appropriate structure can be used. For example, they can be coupled together by welding.

The vehicle body frame 20 is provided with, below the inner frame members 21, bottom frame members 25 supporting a battery tray 24 for placing a battery, and the battery protection part 22p of the outer frame member 22 is located between the inner frame member 21 and the bottom frame member 25 vertically in a side view and is also separated from the bottom frame member 25. A clearance between the battery protection part 22p and the bottom frame member 25 is denoted by S2 in Fig. 4.

Such configuration can suppress deformation of the inner frame member 21 and the bottom frame member 25 following deformation of the battery protection part 22p of the outer frame member 22 as a result of receiving external force. In particular, an influence on the bottom frame member 25 supporting the battery tray 24 for placing the battery can be remarkably suppressed, which therefore easily protects the battery B from the external force. The cross frame member 23 and the bottom frame member 25 do not have to be joined together, but considering the aforementioned point, it is desirable that the cross frame member 23 and the bottom frame member 25 be not joined together (firmly attached to each other) by, for example, welding.

The inner frame members 21 and 21 are coupled together with a cross member 21 c2 above tip parts of the bottom frame members 25, and this cross member 21c2 and the tip parts of the bottom frame members 25 are coupled together with front plates 25f.

The inner frame members 21 and 21 are coupled together with a cross member 21 c3 above rear end parts of the bottom frame members 25, and the cross member 21 c3 and the rear end parts of the bottom frame members 25 are coupled together with rear plates 25r.

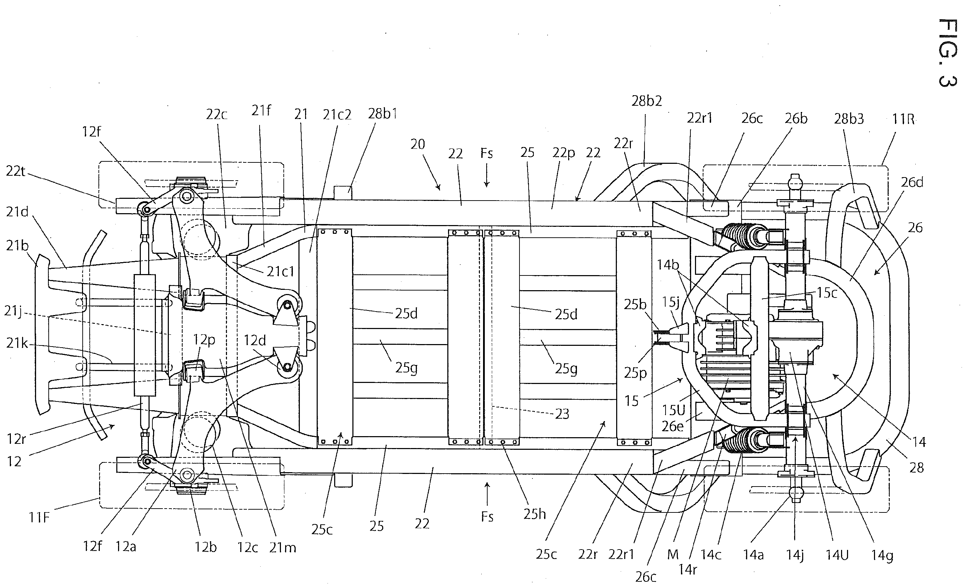

Bottom parts of the bottom frame members 25 and 25 are coupled together with a plurality (two in the drawing) of bottom frame members 25c. The bottom frame member 25c is formed into a shape of a drain board in a plan view with a pair of lateral frames 25d and 25d extending in a vehicle width direction and a plurality (three in the drawing) of coupling members 25g coupling together the lateral frames 25d and 25d and extending in an anteroposterior direction. At the top of the bottom frame members 25c, the battery tray 24 is placed. The bottom frame members 25c are removably fitted to the bottom frame members 25 by fixing both end portions of the lateral frames 25d to the bottom frame members 25 with bolts 25h (see Fig. 3).

Front parts 21f of the pair of inner frame members 21 are bent inwardly in front of the battery B.

Such configuration makes it easy to protect the battery B from the external force through energy absorption as a result of deformation of the front parts 21f of the inner frame members 21, even with respect to external force Fr from the front.

The front parts 21f of the pair of inner frame members 21 are bent inwardly and consequently shaped into a truncated chevron shape in bottom view, and their tip parts are integrally coupled with a cross member 21c1. In front of the cross member 21 c1, a pair of right and left shock absorbing members 21 d and 21 d of a hollow, conical shape are integrally provided, and at tips of these shock absorbing members 21 d and 21 d, a front bumper 21 b is provided.

Therefore, with respect to the external force Fr from the front, the battery B is even more easily protected from external force through the energy absorption as the result of the deformation of the front parts 21f of the inner frame members 21 in addition to the bumper 21 b, the shock absorbing members 21 d and 21 d.

Behind the driver's seat 31, a rear seat 32 is provided at a position higher than the driver's seat 31.

The vehicle body frame 20 is provided with rear seat frames 26 that integrally and upwardly rise up from the rear parts 22r of the right and left outer frame members 22 and also that extend behind the battery B to support the rear seat 32.

Such configuration makes it easy to protect the battery B from external force through energy absorption as a result of deformation of the rear seat frames 26, even with respect to the external force Fr from the rear.

The rear seat frames 26 in this embodiment is provided with: rising members 26c that integrally rise upwardly towards the rear from the rear parts 22r of the right and left outer frame members 22; lateral bridge members 26b of a hollow, plate-like shape that integrally couple together top ends of the pair of rising members 26c; and a U-shaped member 26d that is fixed to the lateral bridge members 26b. Both ends 26e of the U-shaped members 26d are fixed to bottom surfaces of the lateral bridge members 26b and arch parts of the U-shaped members protrude towards the rear and plays a role as a rear bumper.

As shown in Fig. 1, the driver's seat 31 is offset to the left in a traveling direction from a center 20c of the vehicle body frame 20, and the rear seat 32 is offset to the right in the traveling direction from the center 20c of the vehicle body frame 20. This makes it possible to shorten a vehicle width in the anteroposterior direction.

The vehicle body frame 20 and other parts in this embodiment will be described in more detail. All members forming the vehicle body frame 20 are basically hollow members.

Provided between the right and left inner frame members 21 and 21 is a floor member (30) that covers at least the top of the batteries B and that forms the floor 30 in a space where at least feet of the driver D and a passenger are placed (see Fig. 4). The floor member 30 can be fixed to the inner frame members 21 by an appropriate means.

The outer frame members 22 and 22 have, in front of their battery protection parts 22p, front parts 22f that bend (warp) in a manner such as to rise obliquely upward along outside surfaces of the inner frame members 21 and then bend (warp) forward, and forms horizontal parts 22h that extend horizontally. A tip of the outer frame member 22 is denoted by 22t. Provided at warped parts of the outer frame members 22 are coupling members 27, and provided above the outer frame members 22 with the coupling members 27 in between are top frames 28 of a U shape in plan view that extend in the anteroposterior direction in an arch form in side view. The coupling members 27 are coupled together with a cross member 27c.

As shown in Fig. 1, the top frames 28 are reinforced by a plurality of (three in the drawing) cross members 28c. As shown in Figs. 1 and 2, the top frame 28 has a tip portion coupled to the coupling member 27, has a middle-front part coupled to the outer frame member 22 with a first longitudinal member 28b1, has a middle-rear part coupled to the outer frame member 22 with second longitudinal members 28b2, and has a rear part coupled to the U-shaped member 26d of the rear seat frame 26 with a third longitudinal member 28b3.

As can be seen from the above description, the vehicle body frame 20 is provided with the top frames 28 that form part of a roof 10R above the driver D and also that extend in the anteroposterior direction, the front parts 22f of the outer frame members 22 bend upwardly, the front parts 22f of the outer frame members 22 and the front parts 28f of the top frames 28 are coupled together with the coupling members 27, and the outer frame members 22 and the top frame 28 are coupled together with the right and left second longitudinal members 28b2 behind the driver D.

Such configuration forms a boarding space between the top frames 28 and the outer frame members 22, which makes it easy to configure the boarding space wide.

The pair of right and left shock absorbing members 21 d and 21 d of a hollow, conical shape have their base parts coupled together with a cross member 21j, and a top part of the cross member 21j and a top part of the front bumper 21 b are coupled together with a pair of right and left coupling pipes 21 k of a reversed-U shape.

Moreover, as shown in Figs. 2 and 3, integrally provided between a bottom part of the cross member 21j and a bottom part of the cross member 21c2 described above is a base plate 21 m.

To this base plate 21m, etc., the steering device 12 is assembled.

Specifically, to the base plate 21m, right and left arms 12a are pivotably fitted with pivot shafts 12p via dumpers 12d. On the other hand, over the horizontal part 22h near a portion where the coupling part 27 is provided in the outer frame member 22 and the cross member 27c coupling together the coupling members 27, a cushion receiving part 22c is integrally provided. To this cushion receiving part 22c, a top part of a cushion unit 12c is coupled, and between a bottom part of the cushion unit 12c and a tip of the arm 12a, a bearing member 12b of the front wheel 11F is fitted in a manner such as to pivot to the right and left. The pair of right and left bearing members 12b is integrally provided with lever parts 12f extending forward, and a rod 12r coupling together these lever parts 12f interlocks with the steering wheel 13 by an interlocking mechanism (not shown). As a result, upon rotational operation of the steering wheel 13 to the right and left, the rod 12r moves to the right and left, the bearing members 12b pivot to the right and left, and the front wheels 11 F pivot to the right and left.

As described above, the top part of the cushion unit 12c is supported by the cushion receiving part 22c provided at the horizontal part 22h of the outer frame member 22, which makes it possible to firmly support the top part of the cushion unit 12c of the front wheel with the outer frame member 22 with relatively high rigidity (having highest rigidity among the frame members forming the vehicle body frame 20).

Provided at a central part in the vehicle width direction of the rear plate 25r coupling together the cross member 21 c3 described above and the rear end parts of the bottom frame members 25 are support brackets 25b that support the power unit 14 in a manner such as to be capable of oscillating vertically. At the support brackets 25b, a rear swing frame 15 is supported in a manner such as to be capable of oscillating vertically by pivot shafts 25p with dumpers 15d (Fig. 2) in between.

The rear swing frame 15 has: a pipe frame 15U of a U shape in bottom view; and a reinforcement pipe 15c that reinforces this, and coupling parts 15j provided at a front part of the pipe frame 15U are coupled to the support brackets 25b with the pivot shafts 25p with the dumpers 15d (Fig. 2) in between.

The power unit 14 has: a unit main body 14U having the built-in motor M; wheel axles 14a that extend to the right and left from the unit main body 14U and drive the rear wheels 11 R; and right and left guides 14g of a cylindrical shape that guide and protect the wheel axles 14a, and the power unit 14 is loaded onto the rear swing frame 15 by fixing a bottom part of the unit main body 14U to a front part of the pipe frame 15U and the reinforcement pipe 15c with fixing brackets 14b and coupling the right and left guides 14g to rear end portions of the pipe frame 15U with coupling members 14j.

The rear parts 22r of the outer frame members 22 are provided in a manner such as to extend inwardly towards the rear, and rear ends of their extending parts 22r1 and the right and left guides 14g of the power unit 14 are coupled together with links 14r and also the right and left guides 14g and the lateral bridge members 26b described above are coupled together with rear cushion units 14c. Therefore, the rear wheels 11 R are capable of oscillating vertically.

The embodiment of the present invention has been described above, but the present invention is not limited to the aforementioned embodiment, and modifications can be made to the present invention as appropriate within a range not departing from the spirits of the present invention.

The present invention is directed to providing a compact vehicle frame structure capable of hardly having an influence of external force generated by, for example, impact on a battery while suppressing occurrence of a dramatic weight increase.

The compact vehicle frame structure includes: a vehicle body frame 20; a floor 30 permitting placement of feet of a driver seated on a seat 31 provided in the vehicle body frame 20; and a battery B provided on a bottom side of the floor 30 and supplying electric power to a motor M, and the vehicle body frame 20 is provided with: a pair of right and left inner frame members 21 provided on sides of the battery B; and a pair of right and left outer frame members 22 each having a battery protection part 22p of a hollow shape located on an outer side of the inner frame member 21 and separately from the battery B.

## Claims

1. A compact vehicle frame structure comprising:
a vehicle body frame (20);
a floor (30) permitting placement of feet of a driver seated on a driver's seat (31) provided in the vehicle body frame (20); and
a battery (B) provided on a bottom side of the floor (30) and supplying electric power to a motor (M),
wherein the vehicle body frame (20) is provided with:
a pair of right and left inner frame members (21) provided on sides of the battery (B); and
a pair of right and left outer frame members (22) each having a battery protection part (22p) of a hollow shape located on an outer side of the inner frame member (21) and separately from the battery (B),
wherein: the vehicle body frame (20) is provided with, below the inner frame members (21), bottom frame members (25),
**characterized in that** the bottom frame members support (25) a battery tray (24) for placing the battery (B); and
the battery protection parts (22p) of the outer frame members (22) are provided between the inner frame members (21) and the bottom frame members (25) vertically in a side view and are separated from the bottom frame members (25).

2. The compact vehicle frame structure according to claim 1,
wherein a cross frame member (23) of a hollow shape extending across the inner frame members (21) and coupling together the outer frame members (22) is further provided between the battery protection parts (22p) of the pair of right and left outer frame members (22).

3. The compact vehicle frame structure according to any one of claims 1 and 2, wherein front parts (21f) of the pair of inner frame members (21) bend inwardly in front of the battery (B).

4. The compact vehicle frame structure according to any one of claims 1 to 3, comprising:
the driver's seat (31) provided above the floor (30); and
a rear seat (32) provided behind the driver's seat (31) and located at a position higher than the driver's seat (31),
wherein the vehicle body frame (20) is provided with rear seat frames (26) rising upwardly from rear parts of the right and left outer frame members (22) and extending towards the rear behind the battery B to support the rear seat (32).

5. The compact vehicle frame structure according to any one of claims 1 to 4, wherein the vehicle body frame (20) is provided with top frames (28) forming part of a roof (10R) above the driver and extending in an anteroposterior direction, bends front parts (22f) of the outer frame members (22) upwardly, couples together the front parts (22f) of the outer frame members (22) and front parts (28f) of the top frames (28) with coupling members (27), and couples together the outer frame members (22) and the top frames (28) with right and left longitudinal members (28b2) behind the driver.

6. The compact vehicle frame structure according to any one of claims 1 to 5, wherein each of the outer frame members (22) is provided with a horizontal part (22h) bending the front part (22f) upwardly and extending horizontally, and supports a top part of a cushion unit (12c) of a front wheel with the horizontal part (22h).

## Patentansprüche

1. Kompakte Fahrzeugrahmenstruktur, umfassend:
einen Fahrzeugkörperrahmen (20);
einen Boden (30), der die Platzierung von Füßen eines Fahrers ermöglicht, welcher auf einem an dem Fahrzeugkörperrahmen (20) vorgesehenen Fahrersitz (31) sitzt; und
eine Batterie (B), welche an einer Unterseite des Bodens (30) vorgesehen ist und einem Motor (M) elektrische Energie zuführt,
wobei der Fahrzeugkörperrahmen (20) versehen ist mit:
einem Paar von rechten und linken inneren Rahmenelementen (21), die an Seiten der Batterie (B) vorgesehen sind; und
einem Paar von rechten und linken äußeren Rahmenelementen (22), welche jeweils ein Batterieschutzteil (22p) von einer hohlen Form haben, das auf einer Außenseite des inneren Rahmenelements (21) und separat von der Batterie (B) angeordnet ist,
wobei: der Fahrzeugkörperrahmen (20) unter den inneren Rahmenelementen (21) mit unteren Rahmenelementen (25) versehen ist,
**dadurch gekennzeichnet, dass** die unteren Rahmenelemente (25) eine Batterieablage (24) zum Anordnen der Batterie (B) tragen; und
die Batterieschutzteile (22p) von den äußeren Rahmenelementen (22) in einer Seitenansicht vertikal zwischen den inneren Rahmenelementen (21) und den unteren Rahmenelementen (25) vorgesehen sind und von den unteren Rahmenelementen (25) getrennt sind.

2. Kompakte Fahrzeugrahmenstruktur nach Anspruch 1,
wobei ferner zwischen den Batterieschutzteilen (22p) von dem Paar von rechten und linken äußeren Rahmenelementen (22) ein über die inneren Rahmenelemente (21) verlaufendes und die äußeren Rahmenelemente (22) miteinander koppelndes Querrahmenelement (23) von einer hohlen Form vorgesehen ist.

3. Kompakte Fahrzeugrahmenstruktur nach einem der Ansprüche 1 und 2,
wobei sich vordere Teile (21f) von dem Paar von inneren Rahmenelementen (21) vor der Batterie (B) nach innen biegen.

4. Kompakte Fahrzeugrahmenstruktur nach einem der Ansprüche 1 bis 3, umfassen:
den Fahrersitz (31), welcher oberhalb des Bodens (30) vorgesehen ist; und
einen Rücksitz (32), welcher hinter dem Fahrersitz (31) vorgesehen ist und an einer höheren Position als der Fahrersitz (31) angeordnet ist,
wobei der Fahrzeugkörperrahmen (20) mit Rücksitzrahmen (26) versehen ist, welche von hinteren Teilen von den rechten und linken äußeren Rahmenelementen (22) nach oben ansteigen und sich hinter der Batterie (B) nach hinten erstrecken, um den Rücksitz (32) abzustützen.

5. Kompakte Fahrzeugrahmenstruktur nach einem der Ansprüche 1 bis 4, wobei der Fahrzeugkörperrahmen (20) mit oberen Rahmen (28) versehen ist, welche Teil von einem Dach (10R) oberhalb des Fahrers bilden und sich in einer anteroposterioren Richtung erstrecken, vordere Teile (22f) von den äußeren Rahmenelementen (22) nach oben biegt, die vorderen Teile (22f) von den äußeren Rahmenelementen (22) und vordere Teile (28f) von den oberen Rahmen (28) mit Kupplungselementen (27) miteinander koppelt, und die äußeren Rahmenelemente (22) und die oberen Rahmen (28) mit rechten und linken Längselementen (28b2) hinter dem Fahrer miteinander koppelt.

6. Kompakte Fahrzeugrahmenstruktur nach einem der Ansprüche 1 bis 5, wobei jedes der äußeren Rahmenelemente (22) mit einem horizontalen Teil (22h) versehen ist, welcher das vordere Teil (22f) nach oben biegt und sich horizontal erstreckt, und einen oberen Teil einer Dämpfereinheit (12c) von einem Vorderad mit dem horizontalen Teil (22h) abstützt.

## Revendications

1. Structure compacte de châssis de véhicule comprenant :
un châssis de carrosserie de véhicule (20) ;
un plancher (30) permettant le placement des pieds d'un conducteur assis sur un siège de conducteur (31) prévu dans le châssis de carrosserie de véhicule (20) ; et
une batterie (B) prévue sur un côté inférieur du plancher (30) et approvisionnant un moteur (M) avec de l'énergie électrique,
dans laquelle le châssis de carrosserie de véhicule (20) est prévu avec :
une paire d'éléments de châssis intérieurs droit et gauche (21) prévus sur des côtés de la batterie (B) ; et
une paire d'éléments de châssis extérieurs droit et gauche (22) présentant chacun une partie de protection de batterie (22p) d'une forme creuse située sur un côté extérieur de l'élément de châssis intérieur (21) et séparément de la batterie (B),
dans laquelle : le châssis de carrosserie de véhicule (20) est prévu avec, sous les éléments de châssis intérieurs (21), des éléments de châssis inférieurs (25),
**caractérisé en ce que** les éléments de châssis inférieurs soutiennent (25) un bac à batterie (24) pour placer la batterie (B) ; et
les parties de protection de batterie (22p) des éléments de châssis extérieurs (22) sont prévues entre les éléments de châssis intérieurs (21) et les éléments de châssis inférieurs (25) verticalement dans une vue latérale et sont séparées des éléments de châssis inférieurs (25).

2. Structure compacte de châssis de véhicule selon la revendication 1,
dans laquelle un élément de châssis transversal (23) d'une forme creuse s'étendant à travers les éléments de châssis intérieurs (21) et raccordant ensemble les éléments de châssis extérieurs (22) est en outre prévu entre les parties de protection de batterie (22p) et la paire d'éléments de châssis extérieurs droit et gauche (22).

3. Structure compacte de châssis de véhicule selon l'une quelconque des revendications 1 et 2,
dans laquelle des parties avant (21f) de la paire d'éléments de châssis intérieurs (21) se courbent vers l'intérieur devant la batterie (B).

4. Structure compacte de châssis de véhicule selon l'une quelconque des revendications 1 à 3, comprenant :
le siège de conducteur (31) prévu au-dessus du plancher (30) ; et
un siège arrière (32) prévu derrière le siège de conducteur (31) et situé à une position plus élevée que celle du siège de conducteur (31),
dans laquelle le châssis de carrosserie de véhicule (20) est prévu avec des châssis de siège arrière (26) montant vers le haut depuis des parties arrière des éléments de châssis extérieurs droit et gauche (22) et s'étendant vers l'arrière derrière la batterie B en vue de soutenir le siège arrière (32).

5. Structure compacte de châssis de véhicule selon l'une quelconque des revendications 1 à 4,
dans laquelle le châssis de carrosserie de véhicule (20) est prévu avec des cadres supérieurs (28) faisant partie d'un toit (10R) au-dessus du conducteur et s'étendant dans une direction antéropostérieure, courbe les parties avant (22f) des éléments de châssis extérieurs (22) vers le haut, raccorde ensemble les parties avant (22f) des éléments de châssis extérieurs (22) et des parties avant (28f) des cadres supérieurs (28) avec des éléments de raccordement (27), raccorde ensemble les éléments de châssis extérieurs (22) et les cadres supérieurs (28) avec des éléments longitudinaux droite et gauche (28b2) derrière le conducteur.

6. Structure compacte de châssis de véhicule selon l'une quelconque des revendications 1 à 5,
dans laquelle chacun des éléments de châssis extérieurs (22) est prévu avec une partie horizontale (22h) courbant la partie avant (22f) vers le haut et s'étendant horizontalement, et soutient une partie supérieure d'une unité de suspension (12c) d'une roue avant avec la partie horizontale (22h).
